# EUROPÄISCHE PATENTANMELDUNG

(11) **EP 3 902 332 A1**
(43) Veröffentlichungstag der Anmeldung: **27.10.2021**
(21) Anmeldenummer: 20170842.7
(22) Anmeldetag: 22.04.2020
(51) Int. Cl.: H04W 48/18, H04W 4/14, H04W 4/18

(54) **VERFAHREN ZUR SYNCHRONISATION VON DATEN EINER DATENBANK SOWIE COMPUTERPROGRAMM, VORRICHTUNG ZUR DATENVERARBEITUNG UND MOBILES ENDGERÄT HIERZU**

(71) Anmelder: Helmholtz-Zentrum für Infektionsforschung GmbH, 38124 Braunschweig (DE)
(72) Erfinder: Krause, Gérard, 38124 Braunschweig (DE)
(74) Vertreter: Gramm, Lins & Partner Patent- und Rechtsanwälte PartGmbB

(57) **Zusammenfassung**

Die vorliegende Erfindung umfasst ein Verfahren zur Synchronisation von Daten einer Datenbank (7) in mobilen Endgeräten (5) mit Daten in einer zentralen Datenbank (2), wobei die Datenübertragung zwischen mobilem Endgerät (5) und der zentralen Datenbank (2) wahlweise über folgende Datenübertragungskanäle erfolgt:
Kanal a)
- Datennachrichten in einem Sprachkanal eines Mobilfunk-Telefonnetzwerkes (4),
Kanal b)
- IP-Datenpaket in einem Datenkanal eines Mobilfunk-Telefonnetzwerkes (4) zur Datenübertragung über das Internet (3) oder
Kanal c)
- IP-Datenpaket in einem drahtlosen lokalen Zugriffsnetzwerk (WLAN) zur Datenübertragung über das Internet (3),
gekennzeichnet durch
- Überprüfen der Verfügbarkeit der Datenübertragungskanäle über das Internet (3) gemäß Kanal b) über IP-Datenpakete mit einem Datenkanal eines Mobilfunk-Telefonnetzwerkes (4) oder Kanal c) über IP-Datenpakete in einem drahtlosen lokalen Zugriffsnetzwerk, und
bei Verfügbarkeit
- Synchronisieren der Datenbanken (2, 7) über den verfügbaren Kanal b) oder c) für IP-Datenpakete und
bei Nicht-Verfügbarkeit
- Priorisieren zur Synchronisation der zu übertragenen Daten,
- Aufteilen der mit der größten Priorität zu übertragenen Daten in Datennachrichten;
- Übertragen der mit der größten Priorität zu übertragenen Datennachrichten in dem Kanal a) als Datennachrichten in einem Sprachkanal eines Mobilfunk-Telefonnetzwerkes (4).

## Beschreibung

Die Erfindung betrifft ein Verfahren zur Synchronisation von Daten einer Datenbank in mobilen Endgeräten mit Daten in einer zentralen Datenbank, wobei die Datenübertragung zwischen mobilem Endgerät und der zentralen Datenbank wahlweise über folgende Datenübertragungskanäle erfolgt:
- Kanal a): - Datennachrichten in einem Sprachkanal eines Mobilfunk-Telefonnetzwerkes,
- Kanal b): - IP-Datenpakete in einem Datenkanal eines Mobilfunk-Telefonnetzwerkes zur Datenübertragung über das Internet oder
- Kanal c): - IP-Datenpakete in einem drahtlosen lokalen Zugriffsnetzwerk (WLAN) zur Datenübertragung über das Internet.

Die Erfindung betrifft weiterhin ein Computerprogramm, umfassend Befehle, die bei der Ausführung des Programms durch einen Computer diesen veranlassen, die Schritte des Verfahrens zur Synchronisation auszuführen.

Weiterhin betrifft die Erfindung eine Vorrichtung zur Datenverarbeitung umfassend einen Server und einer mit dem Server kommunizierend verbundenen zentralen Datenbank sowie ein mobiles Endgerät zur Datenverarbeitung umfassend ein zur Durchführung des Verfahrens eingerichtetes Computerprogramm.

Eine Synchronisation von Daten in einer zentralen Datenbank mit entsprechenden Daten in Datenbanken mobiler Endgeräte ist für vielfältige Anwendungen erforderlich und üblich. Hierzu erfolgt die Synchronisierung in der Regel automatisch mittels IP-Kommunikation über das Internet. Hierbei werden IP-Datenpakete im Internet-Protokoll-Format über das Internet übertragen und der für diesen Internet-Datenkanal vorgesehene Protokollstandard zur Sicherstellung des fehlerfreien Empfangs der Datenpakete beim Empfänger genutzt. Dies setzt voraus, dass die zentrale Datenbank mit dem mobilen Endgerät über eine stabile Internetverbindung kommunizierend verbunden ist. Hierzu steht den mobilen Endgeräten der Datenkanal des Mobilfunk-Telefonnetzwerkes oder ein direkter Zugriff auf das Internet über ein lokales Zugriffsnetzwerk (Wireless Local Area Network - WLAN) zur Verfügung.

Die Datenübertragung zwischen der zentralen Datenbank und den mobilen Endgeräten erfolgt unter Nutzung standardisierter Kommunikationsprotokolle, die für die Verbindung des mobilen Endgerätes mit einem Netzwerkrouter zur Internetanbindung ein stabiles Mobilfunknetz voraussetzen.

Zur Unterstützung der Kennung und Prävention von Krankheitsausbrüchen ist ein System bekannt, bei dem Krankheitsfälle in Echtzeit über mobile Eingabegeräte (mobile Endgeräte) erfasst werden, deren Nutzer über ein großes Gebiet verteilt sind. Die dezentral erfassten Daten werden in einer zentralen Datenbank zusammengeführt und Daten dieser zentralen Datenbank werden weiteren dezentralen Nutzern durch Aktualisierung der Datenbanken in den mobilen Endgeräten zur Verfügung gestellt. Damit ist ein Management der Kontrolle von Infektionsausbrüchen und ein multidirektionaler Informationsaustausch von fallbasierten Krankheitsüberwachungen ganzheitlich möglich. Dies erfordert eine umfangreiche Datenbank-Synchronisierung zwischen den mobilen Endgeräten und den zentralen Teilen des Systems.

Ein Problem stellt sich dadurch, dass die mobilen Endgeräte auch in schwach erschlossenen Gebieten eingesetzt werden, die nur über eine schlechte Mobilfunkinfrastruktur verfügen. Dies führt dazu, dass die Nutzer Falldaten unter Umständen nicht an den zentralen Server in der erforderlichen Zeit übermitteln können bzw. wichtige Informationen von der zentralen Datenbank nicht oder nicht rechtzeitig erhalten.

Ausgehend hiervon ist es Aufgabe der vorliegenden Erfindung ein verbessertes Verfahren zur Synchronisation von Daten einer Datenbank in mobilen Endgeräten mit einer zentralen Datenbank sowie ein Computerprogramm, eine Vorrichtung zur Datenverarbeitung und ein mobiles Endgerät hierzu zu schaffen.

Die Aufgabe mit dem Verfahren nach Anspruch 1 gelöst. Vorteilhafte Ausführungsformen sind in den hierauf rückbezogenen Ansprüchen beschrieben.

Es wird vorgeschlagen, dass eine Überprüfung der Verfügbarkeit der Datenübertragungskanäle über das Internet gemäß Kanal b) über Datenpakete in einem Datenkanal eines Mobilfunk-Telefonnetzwerkes oder Kanal c) über Datenpakete in einem drahtlosen lokalen Zugriffsnetzwerk erfolgt. Bei einer Verfügbarkeit einer solchen Datenübertragung über einen Internet-Datenübertragungskanal erfolgt ein Synchronisieren der Datenbank über den verfügbaren Datenpaket-Datenübertragungskanal, wie herkömmlich üblich.

Eine Nicht-Verfügbarkeit der Datenübertragungskanäle über das Internet gemäß Kanal b) oder Kanal c) hingegen werden die zur Synchronisation zu übertragenen Daten priorisiert. Dabei werden die mit der größten Priorität zu übertragenen Daten in Datennachrichten aufgeteilt und diese mit der größten Priorität zu übertragenen Datennachrichten in dem Datenübertragungskanal a) als Datennachrichten in einem Sprachkanal eines Mobilfunk-Telefonnetzwerkes übertragen.

Die Synchronisierung wird somit bei Nicht-Verfügbarkeit eines Datenkanals zur Synchronisierung über das Internet zumindest für die wesentlichen Daten sichergestellt. Hierzu werden zunächst nur die mit höchster Priorität auszutauschenden Daten durch Priorisierung nach vorgegebenen Kriterien ausgewählt und für die Datenübertragung in einem Sprachkanal angepasste Datennachrichten aufgeteilt. Diese Datennachrichten sind in der Regel wesentlich kleiner als die zur Übertragung im Internet nutzbaren IP-Datenpakete. Nachdem diese hochpriorisierten Datennachrichten als Kurznachricht über den Sprachkanal an den Empfänger übertragen wurden, können diese im Empfänger wieder zu solchen Datenpaketen zusammengestellt werden, wie sie bei der Datenübertragung über das Internet genutzt werden, oder direkt so ausgelesen und zusammengestellt werden, dass der Inhalt zur Aktualisierung der Datenbank genutzt wird.

Hierzu können die Datennachrichten, die über den Sprachkanal übertragen wurden, mittels eines Parsers ausgelesen und ausgewertet werden.

Das Verfahren stellt einen zuverlässigen Weg zur Datenübertragung vom mobilen Endgerät zur zentralen Datenbank bzw. von der zentralen Datenbank zum mobilen Endgerät sicher, auch wenn eine Datenübertragung über das Internet für das mobile Endgerät nicht möglich ist, zumindest um die zeitkritischen Informationen auszutauschen. Die Daten mit geringerer Priorität können dann entweder erst dann synchronisiert werden, wenn das mobile Endgerät wieder eine Verbindung über einen Datenkanal mit dem Internet hat, oder die weniger zeitkritischen Daten werden im Laufe der Zeit entsprechend ihrer Priorität ebenfalls als Sprachnachricht übertragen.

Auch wenn das mobile Endgerät kurzfristig keine GPRS-Verbindung (General Packet Radio Service) oder WLAN-Verbindung hat, ist damit grundsätzlich ein "Offline-Modus" ohne Internetverbindung möglich. Die Synchronisierung muss dabei nicht zeitverzögert erst dann erfolgen, sobald wieder eine Mobilfunkverbindung im GPRS-Qualität oder eine bessere Internetverbindung besteht. Eine Synchronisierung ist auch zumindest teilweise für die höher priorisierten Daten möglich, falls zeitweise oder dauerhaft keine GPRS-Verbindung möglich ist, aber das mobile Endgerät eine Verbindung zu einem Mobilfunk-Telefonnetz hat, über das ein Kurznachrichtendienst genutzt werden kann.

Ein solches Mobilfunk-Telefonnetz kann ein terrestrisches Mobilfunk-Telefonnetzwerk oder ein satellitengestütztes Netzwerk sein.

Für die Synchronisierung kann ein Rückübertragen einer Bestätigungsnachricht nach fehlerfreiem Erhalt einer Datennachricht im Sprachkanal des Mobilfunk-Telefonnetzwerkes und ein Wiederholen der Übertragung einer Datennachricht erfolgen, wenn innerhalb einer vorgegebenen Zeit keine Bestätigungsnachricht empfangen wurde. Damit wird zur Synchronisierung mittels Sprachkanal ein bidirektionaler Datenaustausch vorgenommen, bei dem der Erhalt einer Datennachricht im Sprachkanal jeweils mit einer Bestätigungsnachricht quittiert wird.

Für die Übertragung von Daten der zentralen Datenbank an mindestens ein mobiles Endgerät kann eine Überprüfung der Verfügbarkeit eines Datenübertragungskanals über das Internet gemäß Kanal b) oder Kanal c) einfach anhand des Erhalts von Bestätigungsnachrichten für den fehlerfreien Empfang von IP-Datenpaketen erfolgen. Für eine solche Datenübertragung im Internet nach dem Internetprotokoll-Standard ist in der Regel ohnehin eine Bestätigung des Erhalts eines Datenpakets im jeweiligen Rückkanal vorgesehen.

Für die Synchronisierung der in den mobilen Endgeräten verteilten Datenbanken durch eine auf die zentrale Datenbank zugreifenden zentralen Server kann es für den zentralen Server bzw. zentralen Sender schwierig oder sogar unmöglich sein, vorab die Verfügbarkeit einer Internet-Datenverbindung mit einem mobilen Endgerät zu überprüfen. Der zentrale Server kann aber bei der Übertragung von IP-Datenpaketen in einem Internet-Datenkanal an ein mobiles Endgerät durch das Ausbleiben von Empfangsbestätigungen erkennen, dass eine Datenübertragung in diesem Internet-Datenübertragungskanal nicht möglich ist. Damit kann eine Überprüfung der Verfügbarkeit der Datenübertragungskanäle über das Internet erfolgen, indem erfolglose Datenübertragungsversuche aus dem Ausbleiben von Bestätigungsnachrichten erkannt werden.

Nach ein- oder mehrfacher Übertragung eines IP-Datenpakets über einen Datenübertragungskanal über das Internet gemäß Kanal b) oder Kanal c) ohne Erhalt einer Bestätigungsnachricht können dann die zur Synchronisierung zu übertragenen Datenpakete priorisiert und in Abhängigkeit ihrer Priorität als Datennachricht in einem Sprachkanal eines Mobilfunk-Telefonnetzwerkes übertragen werden.

Für die Übertragung der priorisierten Datenpakete als Datennachricht über einen Sprachkanal eines Mobilfunk-Telefonnetzwerkes kann ein Kurzmitteilungsdienst (Short-Message-Service - SMS) eines Mobiltelefon-Netzwerkes genutzt werden. Ein solcher Kurzmitteilungsdienst ist sowohl für terrestrische Mobiltelefonnetzwerke als auch für satellitengestützte Mobiltelefon-Netzwerke verfügbar.

Das Verfahren kann zur Überwachung der Ausbreitung von Infektionen durch Austausch von Daten zur Infektionsausbreitung zwischen mobilen Endgeräten und einer zentralen Datenbank genutzt werden. Es stellt sicher, dass die Datenbanken insbesondere für zeitkritische Informationen auch in Gegenden mit schlechter Infrastruktur möglich ist.

Für die Priorisierung können aktuell jeweils einen individuellen Infektionsfall betreffende Daten über das Ergebnis eines Infektionstest mit hoher Priorität übertragen werden, wobei die Übertragung bei Nichtverfügbarkeit eines Datenübertragungskanals über das Internet dann mittels Datennachrichten in einem Sprachkanal erfolgt, d.h. über Kurzmitteilungen.

Das Verfahren kann mit einem Computerprogramm implementiert werden, das Befehle umfasst, die bei der Ausführung des Computerprogramms durch einen Computer diesen veranlassen die Verfahrensschritte zur Synchronisation von Daten in einer Datenbank im mobilen Endgerät mit Daten in einer zentralen Datenbank auszuführen.

Zur Durchführung des Verfahrens kann eine Vorrichtung zur Datenverarbeitung vorgesehen sein, die einen Server und einen mit dem Server kommunizierend verbundene zentrale Datenbank umfasst. Der Server ist sowohl mit dem Internet als auch zur bidirektionalen Übertragung von Sprachnachrichten mit einem Kurzmitteilungsdienst eines Mobilfunk-Telefonnetzwerkes verbunden. Der Server hat Mittel zur Ausführung des Verfahrens zur Synchronisation von Daten in einer Datenbank im mobilen Endgerät mit Daten in einer zentralen Datenbank, die vorzugsweise als oben beschriebenes Computerprogramm ausgeführt sind.

Das Verfahren kann zudem in einem mobilen Endgerät zur Datenverarbeitung implementiert werden, welches ein oben beschriebenes Computerprogramm zur Ausführung der Verfahrensschritte umfasst.

Die Erfindung wird nachfolgend anhand eines Ausführungsbeispiels mit den beigefügten Zeichnungen näher erläutert. Es zeigen:
- Figur 1: - schematisches Blockdiagramm eines Systems mit zentraler Datenbank und mobilem Endgerät zur Synchronisation von Daten;
- Figur 2: - Ablaufdiagramm des Verfahrens zur Synchronisation von Daten;
- Figur 3 a): - erster Teil des Ablaufs der Datenübertragung zur Synchronisation von Daten;

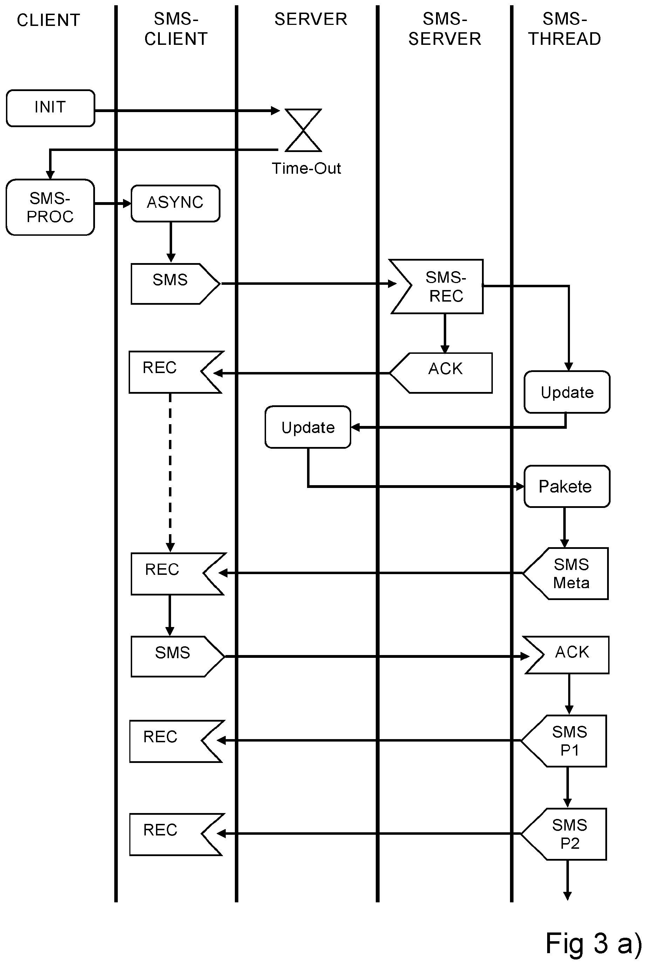

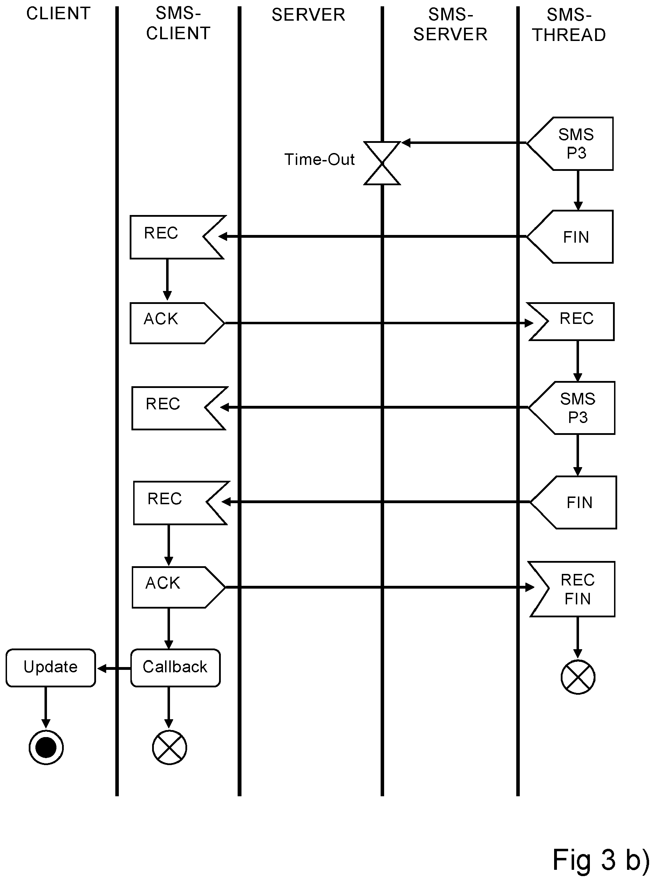

- Figur 3 b): - zweiter Teil des Ablaufs zur Synchronisation von Daten bei einem Fehler bei der SMS-Datenübertragung.

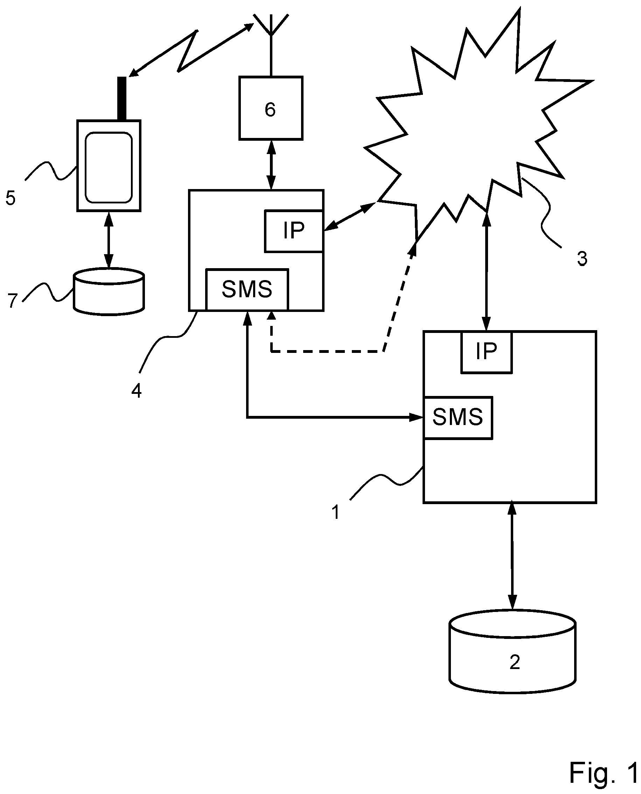

Figur 1 zeigt ein schematisches Blockdiagramm eines Systems, das einen Server 1 und eine mit diesem Server 1 kommunizierend verbundene zentrale Datenbank 2 umfasst. Der Server 1 ist durch ein Computerprogramm eingerichtet, eine Kommunikation nach dem Internet-Protokoll IP über das Internet 3 durchzuführen, um auf diese Weise Daten an andere Teilnehmer des Internets 3 zu übertragen oder Daten von diesen Teilnehmern zu empfangen.

Weiterhin ist der zentrale Server 1 durch ein Computerprogramm und gegebenenfalls den Anschluss an eine geeignete Telekommunikationshardware eingerichtet, Daten über den Sprachkanal eines Mobilfunk-Telekommunikationsnetzes 4 zu übertragen. Hierzu ist der zentrale Server 1 entweder direkt über einen Telefonkanal oder gegebenenfalls über das Internet mittels Nutzung einer IP-Verbindung eingerichtet, Daten in Form von Kurznachrichten über einen Kurznachrichtendienst (Short-Message-Service - SMS) des Mobilfunk-Telefonnetzes 4 an ein mobiles Endgerät 5 zu übertragen oder solche Kurznachrichten SMS von einem mobilen Endgerät 5 zu empfangen.

Hierzu ist das mobile Endgerät 5 in an sich bekannter Weise drahtlos mit mindestens einer Basisstation 6 des Mobilfunk-Telefonnetzwerkes 4 verbindbar, in dessen Kommunikationszelle sich das mobile Endgerät 5 befindet.

Auch das mobile Endgerät 5 umfasst eine Datenbank 7, die entweder in einem Speicher des mobilen Endgerätes 5 oder in einem an das mobile Endgerät 5 angeschlossenen separaten Speicher zur Verwaltung und Abspeicherung von Daten abgelegt ist.

Um nun die Daten in der dezentralen Datenbank 7 des jeweiligen mobilen Endgerätes 5 mit den Daten in der zentralen Datenbank 2 zu synchronisieren, so dass beide Datenbanken 2, 7 über die jeweils aktuellen Daten verfügen, werden Daten aus der dezentralen Datenbank 7 an den zentralen Server 1 und die daran angeschlossene zentrale Datenbank 2 übertragen. Ferner werden die in der zentralen Datenbank 2 verfügbaren aktuellen Daten, welche für ein jeweiliges mobiles Endgerät 5 und dessen dezentraler Datenbank 7 bestimmt sind, in dieser dezentralen Datenbank 7 synchronisiert, indem der zentrale Server 1 diese Daten über das Mobilfunk-Telekommunikationsnetz an das jeweilige mobile Endgerät 5 überträgt.

Der Zugriff auf die Daten der zentralen Datenbank 2 über den zentralen Server 1 kann für die an das Internet 3 angeschlossenen Nutzer in Abhängigkeit von einer entsprechenden Berechtigungsfreigabe über einen Datenaustausch nach dem IP-Protokoll über das Internet 3 mit Hilfe einer Datenpaketübertragung erfolgen. Durch die hierfür verfügbar relativ große Datenbandbreite ist der Zugriff und eine Synchronisation nahezu unbeschränkt möglich.

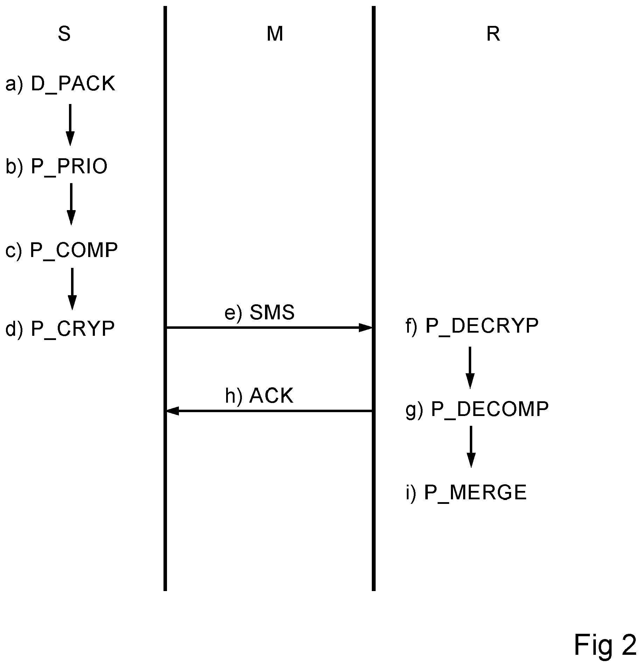

Figur 2 zeigt eine Skizze des Ablaufs des Verfahrens zur Synchronisation von Daten einer Datenbank 7 in dem mobilen Endgerät 5 mit entsprechenden Daten in der zentralen Datenbank 2. Die nachfolgend beschriebene Prozedur kann entweder zur Übertragung von Daten aus der dezentralen Datenbank 7 des mobilen Endgerätes 5 an die zentrale Datenbank 2 genutzt werden oder umgekehrt. Für die Übertragung von Daten aus der dezentralen Datenbank 7 ist das mobile Endgerät 5 als der Sender S und der zentrale Server 1 mit seiner zentralen Datenbank 2 der Empfänger R. Das mobile Telefonnetzwerk 4 wird mit M in Figur 2 bezeichnet.

Für den Fall, dass keine Datenübertragung mit dem Internet-Protokoll IP über das Internet 3 verfügbar ist, erfolgt die Aktualisierung von Daten über den Sprachkanal des mobilen Telefonkommunikationsnetzwerkes 5. Hierzu werden folgende Schritte ausgeführt:

### a) D_PACK:

Es werden die Daten in Datennachrichten mit einer zur Übertragung als Kurznachrichten SMS angepassten Größe zusammengestellt. Diese Datennachrichten werden mit einem geeigneten Identifikator versehen, um die einzelnen Kurznachrichten später wieder zusammenfügen zu können.

### b) P_PRIO:

Die zu synchronisierenden Daten werden priorisiert. Dies erfolgt anhand vorgegebener Kriterien. Eine inhaltliche Priorisierung der Information kann insbesondere bei entsprechend verfügbaren Kapazität durch die Funktion der Zeit erfolgen, die zwischenzeitlich ohne Synchronisierung vergangen ist, und der insgesamt zu synchronisierenden Datenmenge.

Für den Fall des Einsatzes des Verfahrens beim Management und der Analyse von Krankheitsausbrüchen, wie insbesondere Pandemien, können aktuelle Ergebnisse eines Infektionstests für einen Patienten eine sehr hohe Priorität zugeordnet werden, die eine möglichst schnelle Synchronisierung erfordert. Damit lassen sich die Melde- und Reaktionszeiten zur Vornahme von Quarantänemaßnahmen wirksam reduzieren.

### c) B_COMP:

Die aktuell mit hoher Priorität zu übertragenen Datenpakete werden komprimiert. Durch eine solche Kompression wird die Datenmenge reduziert. Hierfür sind bekannte Verfahren der Datenkompression einsetzbar.

### d) PCRYP:

Die komprimierten Daten werden verschlüsselt, um die Datensicherheit insbesondere im Hinblick auf personenbezogene Daten bei der Übertragung vom Sender S an den Empfänger R sicherzustellen.

Der Schritt a) des Erstellens von Datenpaketen in zur Übertragung als Kurznachrichten geeignete Größe kann auch zeitlich erst nach der Kompression und Verschlüsselung erfolgen, so dass die verschlüsselten Daten weiter in einzelne SMS-Kurznachrichten (SMS-Datenpakete) aufgeteilt werden, welche durch eine laufende Nummer beim Empfänger R zuordnen und wieder in die richtige Reihenfolge bringbar sind.

### e) SMS:

Diese als Kurznachrichten verpackten, komprimierten und verschlüsselten Daten (d.h. Datennachrichten) werden als Kurznachricht SMS über den Kurznachrichtendienst des Mobilfunk-Telefonnetzwerkes M an den Empfänger R übertragen. Dies kann über ein terrestrisches Mobilfunk-Telefonnetzwerk 4 oder aber auch über ein satellitengestütztes Netzwerk oder dergleichen erfolgen.

### f) P_DECRYP:

Die empfangenen Kurznachrichten werden beim Empfänger R entschlüsselt. Hierzu wird die zwischen dem Sender S und dem Empfänger R vereinbarte Verschlüsselungsmethode genutzt. Geeignet sind herkömmliche Verschlüsselungsverfahren, wie insbesondere die asymmetrische Verschlüsselung beispielsweise nach dem AES-Standard (Advanced-Encryption-Standard).

### g) P_DECOMP:

Die empfangenen Kurznachrichten werden zudem dekomprimiert. Hierzu werden wiederum geeignete Dekompressionsverfahren eingesetzt, wie sie in der Datenverarbeitungstechnologie bekannt und verfügbar sind.

### h) ACK:

Nachdem der Empfänger R festgestellt hat, dass ein Kurznachricht, oder ein aus Kurznachrichten zusammengestelltes Datenpaket korrekt und vollständig empfangen wurde, wird vom Empfänger R an den Sender S eine Bestätigungsnachricht ACK (Acknowledge Receipt) übertragen. Damit weiß der Sender S, dass die Kurznachricht sicher angekommen ist und kann das entsprechende Datenpaket aus seiner Übertragungsliste als erledigt streichen bzw. als solches markieren.

### i) PMERG:

Der Empfänger R führt die empfangenen Kurznachrichten zu Daten zusammen, um diese für die Aktualisierung der Datenbank 2, 7 des Empfängers R zu nutzen.

Für den Fall, dass im Schritt h) keine Empfangsbestätigung erfolgt ist, kann der Sender S das entsprechende Datenpaket bzw. die Kurznachricht erneut übertragen. Hierzu ist es denkbar, dass der Sender S das erfolglose Übertragen eines Datenpakets bzw. einer Kurznachricht annimmt, wenn nach einer vorgegebenen Zeit (Time-Out) kein Bestätigungssignal ACK empfangen wurde.

Das Verfahren stellt ein asynchrones, fehlertolerantes Kommunikationsprotokoll bereit mit der Folge, dass Netzausfälle und Datenübertragungen über mehrere Stunden und Tage nicht zu einem Verlust von Informationen führen. Vorteilhaft ist es, wenn eine zweistufige Verschlüsselung vorgenommen wird, bei der die Steuerungsdaten sowie die Nutzdaten jeweils anders verschlüsselt werden. Dies gewährleistet eine maximale Sicherheit. Zudem wird hierdurch ermöglicht, dass der Empfänger R während des asynchronen Empfangs der Datenpakete, die eigentliche Nutzdaten nicht unverschlüsselt im Speicher vorhalten muss, sondern erst nach der Finalisierung der Übertragung die einzelnen Nutzdaten entschlüsselt werden.

Ein symmetrisches Verschlüsselungskennwort kann beim Starten der Dienste von dem Sender S dem Empfänger R mitgeteilt werden. Hierzu kann ein Schlüsselspeicher herangezogen werden und die Anfrage asymmetrisch verschlüsselt werden, damit nur der Empfänger R selbst den Inhalt entschlüsseln kann. Um zu gewährleisten, dass eine Datennachricht angekommen ist, schickt der Empfänger R eine beispielsweise mit einem AES-Kennwort verschlüsselte Prüfsumme CRC an den Sender S. Erst danach kann die Synchronisierung durch den Sender S im vollen Umfang erfolgen.

Als Verschlüsselungskennwort kann eine Zufallssequenz genutzt werden, welche vom Sender S und Empfänger R gehalten werden.

Wenn alle asynchronen Abfragen abgearbeitet wurden, kann der Sender S erneut ein Kennwort generieren. Damit können eventuell laufende Übertragungen auch über einen Kaltstart hinaus vollendet werden.

Denkbar ist aber auch, die Erweiterung des Protokolls um ein Einmal-Passwort pro Transfer. Damit lässt sich der senderseitige Verkehr verschlüsseln und Zwischenspeichern, wobei der Schlüssel direkt wieder verworfen wird. Die Daten auf der Seite des Senders S ist nicht mehr lesbar und können nur vom Empfänger R entschlüsselt werden.

Figur 3 a) zeigt ein Ablaufdiagramm der Übermittlung von Daten als Kurznachrichten SMS in einem Sprachkanal eines Mobilfunk-Telefonnetzwerkes.

In diesem Beispiel hat der Sender S ein Computerprogramm, das nachfolgend als Client bezeichnet wird, wobei eine Teilfunktionalität die Kurznachrichten-Datenübertragung steuert (SMS-CLIENT).

Nach der Initialisierung einer Synchronisationsanfrage (INIT) an den Empfänger R (SERVER) wird überprüft, ob die Initialisierungs-Anfrage dort angekommen ist. Wenn keine Verbindung über das Internet nach einer vorgegebenen Wartezeit Time-Out möglich ist, wird die Prozedur zur Übertragung der Daten als Datennachrichten in einem Sprachkanal SMS gestartet (SMS-PROC). In dem SMS-Modul wird dann die asynchrone Verarbeitung der Daten angestoßen (ASYC).

Hierzu wird zunächst eine Datensynchronisierungs-Anforderung als Datennachricht über den Sprachkanal (SMS) an den Empfänger R (SMS-SERVER) gesendet. Dort wird die Datennachricht SMS empfangen und die Synchronisierung gestartet (Update). Zudem wird eine Bestätigungs-Datennachricht über den Sprachkanal an den Client zurückgeschickt, um den Empfang der Synchronisationsanfrage zu quittieren (ACK). Diese Bestätigungsnachricht (ACK) wird vom Client empfangen (REC). Dort wird nun auf den Empfang der Datenpakete gewartet (---). Für den Synchronisationsprozess (Update) wird im Server der Synchronisationsprozess gestartet und die zu synchronisierenden Daten aus der zugeordneten Datenbank (bei dem zentralen Server die zentrale Datenbank 2 und bei einem mobilen Endgerät 5 als Server die dezentrale Datenbank 7) werden ausgelesen und an die Funktionsroutine SMS-THREAD übertragen. Dort werden die Daten in einem lokalen Speicher zwischengespeichert und weiter verarbeitet (Pakete). Hierbei werden die zu übertragenen Daten priorisiert und entsprechend der Priorität verschlüsselt, recodiert und paketiert.

Ein IP-Datenpaket wird dabei mit mehreren Datennachrichten SMS übertragen, wobei eine Gruppe von Datennachrichten logisch zu einem IP-Datenpaket zusammengefasst werden. Hierzu wird eine erste Kurzdatennachricht SMS mit Metadaten von dem Server an den Client übertragen, die den Inhalt, die Anzahl und gegebenenfalls weitere Informationen zu den zusammengehörenden SMS-Kurznachrichten beinhalten. Diese SMS-Metadaten werden vom Client empfangen, wobei der Empfang wieder mit einer SMS-Kurznachricht an den Server bestätigt wird (ACK).

Nach dem Erhalt der Bestätigungsnachricht überträgt der Server mit der Funktionalität des SMS-THREAD die zusammengehörenden Datennachrichten P1, P2, P3, die zusammen ein IP-Datenpaket bilden.

In Figur 3 b) ist die Fortsetzung des Verfahrens aus Figur 3 a) nach der Übertragung der zweiten SMS-Datennachricht P2 beschrieben. Bei der Übertragung der dritten SMS-Datennachricht P3 ist es zu Problemen bei der Datenübertragung gekommen (Time-Out). Diese Datennachricht konnte nicht ausgeliefert werden. Daher wird von dem SMS-THREAD eine Nachricht des Endes der Übertragung des zusammengehörigen Datenpaketes (FIN) an den Client übertragen, der diese Nachricht empfängt und mit einer Bestätigungsnachricht (ACK) an den SMS-THREAD bestätigt. Die Finalisierungsbestätigung enthält die aus dem Empfang der SMS-Metadaten bekannte Identifizierung der noch fehlenden Pakete.

Der SMS-THREAD überträgt dann nach Erhalt der Finalisierungsbestätigung die noch fehlenden SMS-Datennachrichten, wie in diesem Punkt zusammen mit dem Beispiel SMS-P3 für die dritte Datennachricht beschrieben. Es können aber noch weitere Datenpakete wie in Figur 3 a) gezeigt in der Abfolge übertragen werden.

Nach Abschluss der Übertragung der zu den SMS-Metadaten gehörenden Menge von Datennachrichten wird eine Finalisierungsnachricht FIN von dem SMS-THREAD an den Client übertragen, der diese empfängt (REC) und den Empfang mit einer Bestätigungsnachricht bestätigt (ACK). Damit ist die Aufgabe des SMS-THREAD für dieses Datenpaket erledigt.

Der SMS-CLIENT übergibt dann die weitere Bearbeitung an den Client, der die empfangenen SMS-Datennachrichten auswertet, um seine Datenbank zu aktualisieren. Hierzu können die empfangenen SMS-Kurznachrichten beispielsweise mit einem Parser analysiert und so zusammengesetzt werden, dass in einem automatisierten, computergesteuerten Prozess die Daten in der Datenbank aktualisiert werden.

Unter einer Aktualisierung wird nicht nur eine Änderung der entsprechenden bestehenden Daten verstanden, sondern auch eine Ergänzung der Datenbank durch neue Daten oder eine Löschung bestehender Daten.

Durch den Callback und dem Rücksprung auf die weitere Funktionalität des Servers kann für jedes weitere zu aktualisierende Datenpaket zunächst auf die Initialisierungsphase zurückgesprungen werden, um festzustellen, ob wieder ein Datenübertragungskanal zur IP-gestützten Datenübertragung über das Internet verfügbar ist. Dies hat den Vorteil, dass eine wesentlich schnellere und preiswertere Synchronisierung über die IP-gestützte Datenpaketübertragung möglich ist. Die Datenmenge und die Übertragungszeit ist bei der Übertragung von Daten als Datennachrichten in einem Sprachkanal eines Mobilfunk-Telefonnetzwerkes erheblich eingeschränkt. Diese Möglichkeit sollte daher nur für hochpriorisierte Daten und nur bei Bedarf genutzt werden.

Das Verfahren kann mit einem Computerprogramm realisiert werden, welches verschiedene logische Funktionskomponenten hat.

Diese umfassen eine Verschlüsselung/ Entschlüsselung (Encryption/ Deencryption).

Weiter kann eine Funktionskomponente zur Datenpaketverwaltung vorhanden sein.

Für die Nutzung des Sprachkanals eines Mobilfunk-Telefonnetzwerkes kann eine Funktionskomponente für den Verbindungsaufbau vorgesehen sein.

Weiterhin ist es vorteilhaft, wenn eine Funktionskomponente zur Verwaltung der einzelnen Funktionsaufrufe des Computerprogramms vorhanden ist, die die einzelnen Funktionen und den Ablauf in einem Prozessor koordiniert.

Für die Zusammenstellung der Datennachrichten in das SMS-Transportprotokoll kann ebenso eine Funktionskomponente vorhanden sein.

Für die Synchronisierung können mindestens zwei Protokollschichten realisiert werden. Eine obere Protokollschicht ist für den Inhalt der zu synchronisierenden Daten zuständig und befasst sich mit dem, was aus fachlicher Sicht übertragen werden soll. Da sowohl Abfrage, Antwort als auch Versand der Daten asynchron laufen, ist zudem eine entsprechende Steuerungsschicht auf der unteren Protokollebene sinnvoll. Diese kann eine SMS-Ankündigung, Übertragung der einzelnen SMS-Datennachrichten und der SMS-Finalisierungsankündigung umfassen, um diese Datennachrichten aus dem von der höheren Protokollebene bereitgestellten Daten zu erstellen und insbesondere die Versendung zu veranlassen.

Die höhere Protokollebene kann zur Erstellung einer Synchronisationsabfrage und einer Parametrierung mit den Werten aus einer ursprünglichen Synchronisationsabfrage eingesetzt werden. Hierbei erfolgt auch die Verschlüsselung, Recodierung und Kompression der Abfragedaten. Die einzelnen im Sprachkanal übertragenen Datennachrichten SMS können über die Nutzdaten hinaus eine Prüfsumme, den Pakettyp, die Paketnummer und eine Abfragenummer enthalten. Die Sendungsbestätigung ACK kann ebenso eine Prüfsumme, die Anzahl der empfangenen Pakete und eine Abfragenummer enthalten.

Bei der Initialisierung kann eine Schlüsselankündigung mit einer Datennachricht übertragen werden, welches ein mit einem öffentlichen Schlüssel verschlüsseltes AES-Kennwort für die Datenkommunikation und eine Prüfsumme enthält.

Der Erhalt des Schlüssels kann mit einer Prüfsumme über das empfangene AES-Kennwort bestätigt werden, welche mit dem AES-Kennwort verschlüsselt wird.

Die SMS-Metadaten können eine Information über die Anzahl der Pakete, die Abfragenummer und die Anzahl der bisher durchgeführten Zustellungsversuche sowie eine Prüfsumme über alle Paketinhalte umfassen. Die Bestätigung dieser Sendungsankündigung kann neben der Abfragenummer und der Anzahl der Pakete eine Prüfsumme des Sendungspakets umfassen.

Die Finalisierung kann mit einer Datennachricht angekündigt werden, welche die Anzahl der zu übertragenen Pakete, die Abfragenummer, die Anzahl der bisher durchgeführten Zustellungsversuche und eine Prüfsumme über alle Paketinhalte umfassen.

Diese Finalisierungsankündigung kann mit einer Datennachricht bestätigt werden, welche die Anzahl der Datenpakete, die Abfragenummer und Nutzdaten sowie eine Prüfsumme umfasst. Als Nutzdaten können die Identifikationen der fehlenden Datennachrichten übertragen werden.

Diese unterschiedlichen Arten von Datennachrichten können mit einem geeigneten Identifikator in der jeweiligen Datennachricht gekennzeichnet werden.

Das Verfahren zur Synchronisation von Daten in Datenbanken kann nicht nur zum Übertragen von erstellten oder geänderten produktiven Daten auf den Server, z.B. bei neuen Fällen, und zum Abrufen von produktiven Daten vom Server zum mobilen Endgerät z.B. für Fälle und Kontakte etc. genutzt werden. Es kann auch zum Abruf von Infrastrukturdaten vom Server dienen, z.B. von Informationen zu Gesundheitseinrichtungen und zu Nutzern.

Mit dem Synchronisationsverfahren ist eine Datenkommunikation auch über eine Nicht-IP-Datenverbindung möglich. Dabei werden Informationen über zulässige und verbleibende Daten basierend auf dem Servermodul vorgenommene Konfigurationen sowie Informationen über die Qualität und Bandbreite der verfügbaren Datenverbindungen geliefert. Es wird ein asynchrones Senden von Daten und die Registrierung von Listenern ermöglicht, die die Antwort verarbeiten können.

Das im Client ausgeführte Computerprogramm übernimmt das Paketmanagement, um Daten beliebiger Größe senden zu können und sicherzustellen, dass keine Daten verloren gehen. Der die Antworten erhaltende Dienst kann im Hintergrund ausgeführt werden, so dass die Anwendung nicht ständig aktiv sein muss.

Es kann eine Neuregistrierung von Teilnehmern für ausstehende Anfragen ermöglicht werden, so dass diese immer noch bearbeitet werden können, falls die Anwendung unerwartet oder durch den Benutzer beendet wird. Anfragen können automatisch storniert werden, wenn für einen definierten Zeitraum keine Antwort empfangen wird. Dabei ist es vorteilhaft, wenn die Antworten http-Statuscodes verwenden, um über Erfolge oder Probleme der Kommunikation zu informieren. Die Daten können von einem Hintergrunddienst empfangen werden, ohne dass danach aktiv gesucht werden muss. Die Empfänger, die für diesen Dienst registriert sind, ermöglichen es der Anwendung, diese Daten zu verarbeiten.

Das mobile Endgerät 5 kann bereits werksseitig durch seine unmittelbare Telefonfunktionalität als Mobiltelefon eingerichtet sein, eine Sprachnachricht als Kurznachricht über den Sprachkanal zu übertragen. Der zentrale Server 1 hingegen kann über ein hieran angeschlossenes Mobiltelefon oder über eine IP-Verbindung zu einem Dienstanbieter oder ein Gateway-Gerät eingerichtet sein, um den Versand und/oder den Empfang von Daten als Kurznachricht SMS in einem Sprachkanal eins Mobilfunk-Telefonnetzwerkes zu ermöglichen.

Dabei ist der Empfang von Daten möglich, die in mehrere Kurznachrichten aufgeteilt wurden und die gegebenenfalls komprimiert und verschlüsselt wurden. Dabei kann zusätzlich eine Authentifizierung von Transaktionen ermöglicht werden, die auf den SMS-Metadaten oder auf Autorisierungsprotokollen und gegebenenfalls der Telefonnummer des die Kurznachricht übertragenen mobilen Endgerätes basieren.

Für die Priorisierung kann beispielsweise ein gemeldeter Infektionsfall mit grundlegenden Informationen über die damit verbundene Krankheit, das Berichtsdatum, den Personennamen und einen UID (Universal Unique Identifier) als hochpriorisierte Daten gekennzeichnet und übertragen werden. Der Identifikator UID kann später, wenn eine Internet-Datenverbindung wieder verfügbar ist, genutzt werden, um die Basisfalldaten mit den vollständigen Falldaten zusammenzuführen.

Neben der Vollberichterstattung für die Infektionsausbruchskontrolle ist auch eine wöchentliche Berichtserstattung von dem mobilen Endgerät auf den Server denkbar. Dieser Wochenbericht kann die Anzahl der vom Benutzer in der letzten Woche gemeldeten Infektionsfälle enthalten.

Wenn der Benutzer für einen bestimmten Zeitraum nicht über eine Internetverbindung online war, sollten die Daten mit hoher Priorität als Kurznachricht an das mobile Endgerät des Benutzers gesendet werden. Hierzu muss der Server Kenntnis darüber haben, zu welcher Zeit jeder Benutzer das letzte Mal online war und welches Gerät diesem Benutzer zugeordnet ist. Diese Informationen werden von dem Server gesammelt und entsprechend ausgewertet.

Ergebnisse einer zentralen Laboruntersuchung sollten eine hohe Priorität haben. Wenn ein Infektions-Auswertelabor ein Untersuchungsergebnis an den Server 1 übermittelt hat, ist es wichtig, die vor Ort tätigen Benutzer möglichst schnell zu informieren. Dies kann dann mit Hilfe der Kurznachrichten SMS erfolgen.

## Patentansprüche

1. Verfahren zur Synchronisation von Daten einer Datenbank (7) in mobilen Endgeräten (5) mit Daten in einer zentralen Datenbank (2), wobei die Datenübertragung zwischen mobilem Endgerät (5) und der zentralen Datenbank (2) wahlweise über folgende Datenübertragungskanäle erfolgt:
Kanal a) - Datennachrichten in einem Sprachkanal eines Mobilfunk-Telefonnetzwerkes (4),
Kanal b) - IP-Datenpaket in einem Datenkanal eines Mobilfunk-Telefonnetzwerkes (4) zur Datenübertragung über das Internet (3) oder
Kanal c) - IP-Datenpaket in einem drahtlosen lokalen Zugriffsnetzwerk (WLAN) zur Datenübertragung über das Internet (3),
**gekennzeichnet durch**
- Überprüfen der Verfügbarkeit der Datenübertragungskanäle über das Internet (3) gemäß Kanal b) über IP-Datenpakete mit einem Datenkanal eines Mobilfunk-Telefonnetzwerkes (4) oder Kanal c) über IP-Datenpakete in einem drahtlosen lokalen Zugriffsnetzwerk, und
bei Verfügbarkeit
- Synchronisieren der Datenbanken (2, 7) über den verfügbaren Kanal b) oder c) für IP-Datenpakete und
bei Nicht-Verfügbarkeit
- Priorisieren zur Synchronisation der zu übertragenen Daten,
- Aufteilen der mit der größten Priorität zu übertragenen Daten in Datennachrichten;
- Übertragen der mit der größten Priorität zu übertragenen Datennachrichten in dem Kanal a) als Datennachrichten in einem Sprachkanal eines Mobilfunk-Telefonnetzwerkes (4).

2. Verfahren nach Anspruch 1, **gekennzeichnet durch** Rückübertragen einer Bestätigungsnachricht (ACK) nach fehlerfreiem Erhalt einer Datennachricht in dem Sprachkanal des Mobilfunk-Telefonnetzwerkes (4) und Wiederholen der Übertragung einer Datennachricht, wenn innerhalb einer vorgegebenen Zeit keine Bestätigungsnachricht (ACK) empfangen wurde.

3. Verfahren nach Anspruch 1 oder 2, **dadurch gekennzeichnet, dass** für die Übertragung von Daten der zentralen Datenbank (2) an mindestens ein mobiles Endgerät (5) eine Überprüfung der Verfügbarkeit eines Datenübertragungskanals über das Internet (3) gemäß Kanal b) oder Kanal c) anhand des Erhalts von Bestätigungsnachrichten (ACK) für den fehlerfreien Empfang von Datenpaketen erfolgt.

4. Verfahren nach Anspruch 3, **dadurch gekennzeichnet, dass** nach ein- oder mehrfacher Übertragung eines Datenpakets über einen Datenübertragungskanals gemäß Kanal b) oder Kanal c) über das Internet (3) ohne Erhalt einer Bestätigungsnachricht (ACK) die Datenpakete priorisiert und in Abhängigkeit ihrer Priorität als Datennachrichten in einem Sprachkanal eines Mobilfunk-Telefonnetzwerkes (4) übertragen werden.

5. Verfahren nach einem der vorhergehenden Ansprüche, **dadurch gekennzeichnet, dass** der Datenübertragungskanal mit Datennachrichten über einen Sprachkanal eines Mobilfunk-Netzwerkes einen Kurzmitteilungsdienst (Short-Message-Service SMS) eines terrestrischen Mobiltelefon-Netzwerkes oder eines Satellitenkommunikations-Netzwerkes genutzt wird.

6. Verfahren nach einem der vorhergehenden Ansprüche, **gekennzeichnet durch** Überwachung der Ausbreitung von Infektionen durch Austausch von Daten zur Infektionsausbreitung zwischen mobilen Endgeräten (5) und einer zentralen Datenbank (2).

7. Verfahren nach Anspruch 6, **dadurch gekennzeichnet, dass** aktuell jeweils einen individuellen Infektionsfall betreffende Daten über das Ergebnis eines Infektionstests mit hoher Priorität übertragen werden, wobei die Übertragung bei Nichtverfügbarkeit eines Datenübertragungsnetzwerkes über das Internet (3) mittels Datennachrichten in einem Sprachkanal eines Mobilfunk-Telefonnetzwerkes (4) erfolgt.

8. Computerprogramm, umfassend Befehle, die bei der Ausführung des Programms durch einen Computer diesen veranlassen, die Schritte des Verfahrens nach einem der vorhergehenden Ansprüche auszuführen.

9. Vorrichtung zur Datenverarbeitung umfassend einen Server (1) und einer mit dem Server (1) kommunizierend verbundenen zentralen Datenbank (2), wobei der Server (1) mit dem Internet (3) und zur bidirektionalen Übertragung von Sprachnachrichten mit einem Kurzmitteilungsdienst eines Mobilfunk-Telefonnetzwerkes (4) verbunden ist, und wobei der Server (1) Mittel zur Ausführung des Verfahrens nach einem der Ansprüche 1 bis 7 umfasst.

10. Mobiles Endgerät zur Datenverarbeitung umfassend ein Computerprogramm nach Anspruch 8 zur Ausführung der Schritte des Verfahrens nach einem der Ansprüche 1 bis 7.
